# FASCICULE DE BREVET EUROPEEN

(11) **EP 1 461 508 B1**
(45) Date de publication et mention de la délivrance du brevet: **15.08.2007**
(21) Numéro de dépôt: 02799131.4
(22) Date de dépôt: 31.12.2002
(51) Int. Cl.: E05F 15/12

(54) **CAPOT DE COFFRE DE VEHICULE**
KOFFERRAUMDECKEL FÜR KRAFTFAHRZEUGE
VEHICLE TRUNK HOOD

(30) Priorité: 04.01.2002 FR 0200105
(43) Date de publication de la demande: 29.09.2004
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2002/004592
(87) Numéro de publication internationale: WO 2003/060271

(56) Documents cités:
- DE-A- 4 124 869
- US-A- 2 535 600
- US-A- 3 343 303

## Description

La présente invention concerne un capot de coffre de véhicule, notamment un capot de coffre à bagages, par exemple de coffre arrière.

Les bagages disposés dans le coffre d'un véhicule peuvent gêner la fermeture du capot.

Quand la fermeture du coffre se fait manuellement, l'opérateur s'aperçoit de cette gêne et agit en conséquence, notamment en déplaçant le bagage gênant.

Quand la fermeture du coffre se fait automatiquement, suite à la commande d'un opérateur, la gêne n'est pas perçue par l'opérateur et la continuation du mouvement de fermeture peut entraîner soit la détérioration du bagage soit celle du mécanisme de fermeture.

Pour éviter un tel inconvénient, il existe des coffres équipés de rideaux qui servent à protéger les bagages, l'opérateur devant déployer le rideau pour vérifier que les bagages sont bien tous dans le logement délimité par celui-ci. Une telle solution oblige l'intervention de l'opérateur et demande un équipement particulier.

Le but de l'invention est de réaliser un dispositif apte à empêcher la continuation du mouvement de fermeture d'un coffre à fermeture automatique dès qu'un bagage gêne cette fermeture.

Selon l'invention, un capot de coffre apte à se fermer automatiquement sur commande et à recouvrir le coffre en position fermée et comprenant une surface interne, comprend une nappe interne solidaire de la surface interne du capot, au moins un moyen de liaison déformable apte à relier la nappe interne à la surface interne de façon mobile entre une position éloignée et une position rapprochée, et au moins un contacteur apte détecter une position rapprochée de la nappe interne par rapport à la surface interne et à commander l'interruption du mouvement de fermeture du capot.

Ainsi, dès qu'un bagage gêne la fermeture du capot, il entre en contact avec la nappe interne et la rapproche de la surface interne du capot, ce qui actionne le contacteur et entraîne l'interruption du mouvement de fermeture. De cette façon, ni les bagages ni le mécanisme de fermeture ne sont endommagés. L'opérateur averti de l'interruption de la fermeture peut contrôler et corriger le chargement des bagages.

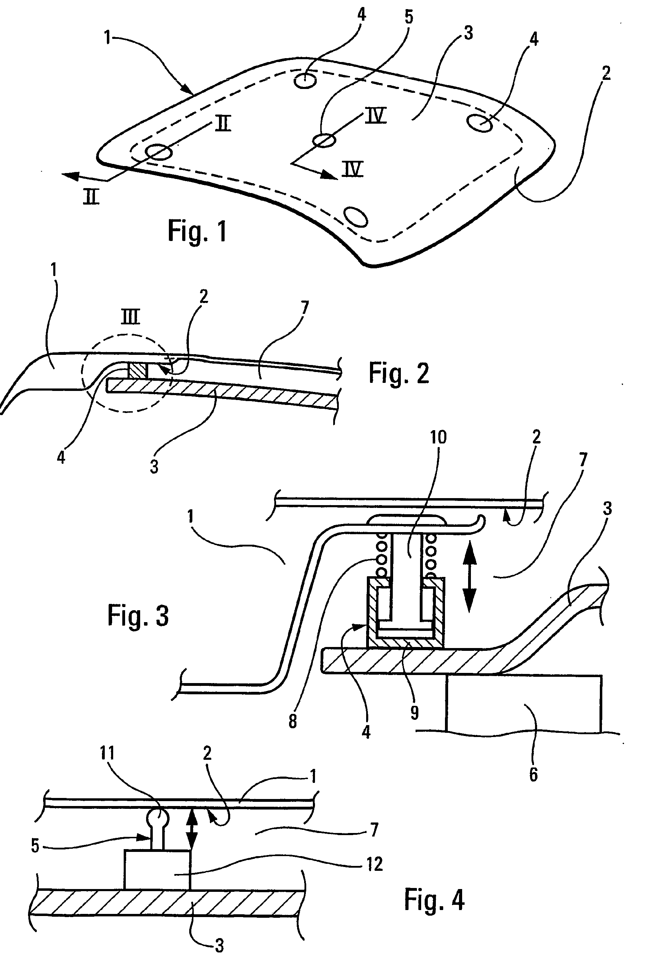

Il convient d'entendre l'expression « surface interne » de façon large, et englobant la surface inférieure d'une structure à plusieurs feuilles, comme illustré à la figure 2.

D'autres particularités de la présente invention ressortiront de la description qui va suivre.

Aux dessins annexés, donnés à titre d'exemples non limitatifs,
- la figure 1 représente une vue schématique en perspective d'un capot de coffre conforme à la présente invention ;
- la figure 2 représente une vue partielle en coupe du capot selon la ligne II-II à la figure 1 passant par un moyen de liaison déformable ;
- la figure 3 représente une vue agrandie de la zone III de la figure 2 ; et
- la figure 4 représente une vue partielle en coupe du capot selon la ligne IV-IV à la figure 1 passant par un contacteur.

Un capot 1 de coffre arrière de véhicule est articulé de façon à pouvoir être mobile entre une position ouverte dans laquelle le coffre est accessible de l'extérieur et peut être chargé ou déchargé de son contenu et une position fermée dans laquelle le coffre n'est plus accessible.

Le capot 1 comprend une surface interne 2 qui fait face au coffre quand le capot 1 est en position fermée et recouvre l'ouverture du coffre.

Selon la présente invention, le capot 1 comprend une nappe interne 3 qui est solidaire de la surface interne 2. La nappe interne 3 suit le mouvement général du capot 1. La nappe interne 3 se trouve à l'intérieur du coffre quand le capot 1 est en position fermée et elle s'étend sensiblement sur toute la surface définie par l'ouverture du coffre de sorte que tout bagage placé dans le coffre et susceptible de gêner la fermeture du capot 1 peut entrer en contact avec celle-ci.

Selon la présente invention, le capot 1 comprend aussi au moins un moyen de liaison 4 qui est déformable et qui est apte à relier la nappe interne 3 à la surface interne 2 de façon mobile. Chaque moyen de liaison déformable 4 permet à la nappe interne 3 de suivre le mouvement général de fermeture et d'ouverture subi par le capot 1 tout en permettant à la nappe interne 3 de se déplacer par rapport à la surface interne 2 du capot 1 entre une position normale éloignée de la surface interne 2 et une position rapprochée de la surface interne 2 lorsque la nappe interne 3 vient en contact avec un bagage lors de la fermeture du capot 1.

Selon l'invention, le capot 1 comprend aussi au moins un contacteur 5 qui est apte à détecter une position rapprochée de la nappe interne 3 par rapport à la surface interne 2 du capot 1 et à commander en conséquence l'interruption du mouvement de fermeture du capot 1.

Lors de la fermeture du capot 1, si un bagage 6 situé dans le coffre gêne cette fermeture, il entre en contact avec la nappe interne 3. Les moyens de liaison déformables 4 permettent que la nappe interne 3 se rapproche de la surface interne 2 du capot 1 jusqu'à ce que la nappe interne 3 atteigne une position rapprochée ce qui actionne le contacteur 5 et entraîne l'interruption du mouvement de fermeture du capot 1. De cette façon, ni les bagages ni le mécanisme de fermeture ne sont endommagés. L'opérateur averti de l'interruption de la fermeture peut contrôler et corriger le chargement des bagages.

Dans le mode de réalisation illustré aux figures 1 à 4, le capot 1 est équipé de quatre moyens de liaison déformables 4, chacun de ces moyens de liaison déformables 4 étant situé à proximité d'un coin correspondant du capot 1, dans l'espace 7 entre la surface interne 2 et la nappe interne 3. Le capot 1 est aussi équipé d'un contacteur 5 disposé sensiblement en son centre et également entre la surface interne 2 et la nappe interne 3.

Dans le mode de réalisation illustré à la figure 3, le moyen de liaison déformable 4 comprend un organe élastique 8 qui sollicite en permanence la nappe interne 3 vers sa position éloignée par rapport à la surface interne 2.

Le moyen de liaison déformable 4 comprend un guide 9 fixé à la nappe interne 3 et un élément 10 fixé à la surface interne 2. L'élément 10 est mobile en translation par rapport au guide 9 entre une position sortie dans laquelle la nappe interne 3 est dans sa position éloignée par rapport à la surface interne 2 et une position escamotée dans laquelle la nappe interne 3 est dans sa position rapprochée par rapport à la surface interne 2.

L'organe élastique 8 qui est un ressort de compression est fixé d'une part au guide 9 et d'autre part à la surface interne 2, et sollicite en permanence l'élément mobile 10 vers sa position sortie.

Dans l'exemple illustré à la figure 3, un bagage 6 gêne la fermeture du capot 1 et met, d'une part, la nappe interne 3 dans une position rapprochée, et d'autre part, l'élément mobile 10 vers sa position escamotée.

Comme on peut le voir à la figure 4, le contacteur 5 peut comprendre une tige 11 formant interrupteur, mobile par rapport à un boîtier 12 qui est relié à un dispositif connu quelconque de commande de la fermeture automatique du capot 1. Le mouvement de la tige 11 par rapport au boîtier 12 est provoqué par celui de la nappe interne 3 par rapport à la surface interne 2.

Bien entendu, la présente invention n'est pas limitée aux modes de réalisation que l'on vient de décrire, et on peut ajouter à ceux-ci de nombreux changements et modifications sans sortir du cadre de l'invention.

Par exemple, le contacteur 5, quand il est actionné, peut commander non seulement l'interruption de la fermeture automatique du capot 1, mais aussi son ouverture automatique.

D'autres modes de réalisation du moyen de liaison déformable 4 sont possibles, le guide 9 pouvant par exemple être fixé à la surface interne 2 du capot 1 et l'élément mobile 10 à la nappe interne 3.

D'autres types de contacteur 5 peuvent convenir.

Il est aussi possible de fixer la nappe interne 3 à la surface interne 2 par trois moyens de liaison déformable 4.

## Revendications

1. Capot (1) de coffre de véhicule apte à se fermer automatiquement sur commande et à recouvrir le coffre en position fermée et comprenant une surface interne (2), **caractérisé en ce qu'**il comprend une nappe interne (3) solidaire de la surface interne (2), au moins un moyen de liaison déformable (4) apte à relier la nappe interne (3) à la surface interne (2) de façon mobile entre une position éloignée et une position rapprochée, et au moins un contacteur (5) apte à détecter une position rapprochée de la nappe interne (3) par rapport à la surface interne (2) et à commander l'interruption du mouvement de fermeture du capot (1).

2. Capot (1) selon la revendication 1, **caractérisé en ce que** la nappe interne (3) s'étend sensiblement sur toute la surface définie par l'ouverture du coffre.

3. Capot (1) selon la revendication 1 ou 2, **caractérisé en ce qu'**il comprend quatre moyens de liaison déformables (4) situés chacun à proximité d'un coin correspondant du capot (1), et un contacteur (5) disposé sensiblement au centre de celui-ci.

4. Capot (1) selon l'une des revendications 1 à 3, **caractérisé en ce que** chaque moyen de liaison déformable (4) est situé entre la surface interne (2) et la nappe interne (3).

5. Capot (1) selon l'une des revendications 1 à 4, **caractérisé en ce que** chaque contacteur (5) est situé entre la surface interne (2) et la nappe interne (3).

6. Capot (1) selon l'une des revendications 1 à 5, **caractérisé en ce que** chaque moyen de liaison déformable (4) comprend un organe élastique (8) sollicitant en permanence la nappe interne (3) en position éloignée par rapport à la surface interne (2).

7. Capot (1) selon l'une des revendications 1 à 6, **caractérisé en ce que** chaque moyen de liaison déformable (4) comprend un guide (9) fixé à l'une des deux structures parmi la surface interne (2) et la nappe interne (3) et un élément (10) fixé à l'autre des deux structures et mobile en translation par rapport au guide (9) entre une position sortie dans laquelle la nappe interne (3) est dans sa position éloignée par rapport à la surface interne (2) et une position escamotée dans laquelle la nappe interne (3) est dans une position rapprochée par rapport à la surface interne (2).

## Claims

1. Motor vehicle trunk hood (1) adapted to close automatically after an order and to cover the trunk in the closed position and comprising an inner surface (2), **characterised in that** it comprises an inner mat (3) fixed to the inner surface (2), at least one deformable linking means (4) adapted to link the inner mat (3) to the inner surface (2) in a mobile way between a remote position and a close position, and at least one contact switch (5) adapted to detect a close position of the inner mat (3) relative to the inner surface (2) and to control interruption of the closing movement of the hood (1).

2. Hood (1) according to claim 1, **characterised in that** the inner mat (3) extends approximately over the entire surface defined by the opening of the trunk.

3. Hood (1) according to either claim 1 or 2, **characterised in that** it is provided with four deformable linking means (4), each located close to a corresponding corner of the hood (1), and a contact switch (5) placed approximately at its centre.

4. Hood (1) according to one of claims 1 to 3, **characterised in that** each deformable linking means (4) is located between the inner surface (2) and the inner mat (3).

5. Hood (1) according to one of claims 1 to 4, **characterised in that** each contact switch (5) is located between the inner surface (2) and the inner mat (3).

6. Hood (1) according to one of claims 1 to 5, **characterised in that** each deformable linking means (4) comprises an elastic device (8) that permanently urges the inner mat (3) in a remote position from the inner surface (2).

7. Hood (1) according to one of claims 1 to 6, **characterised in that** each deformable linking means (4) comprises a guide (9) fixed to one of the two structures among the inner surface (2) and the inner mat (3) and an element (10) fixed to the other one of the two structures and free to move in translation with respect to the guide (9) between an extended position in which the inner mat (3) is in its remote position relative to the inner surface (2) and a retracted position in which the inner mat (3) is in its close position relative to the inner surface (2).

## Patentansprüche

1. Kofferraumdeckel (1) für ein Fahrzeug, der automatisch auf Befehl schließbar ist und in geschlossener Position den Kofferraum abdeckt und eine Innenschicht (2) aufweist, **gekennzeichnet durch** eine Innenlage (3), die mit der Innenschicht (2) verbunden ist, mindestens eine deformierbare Verbindungseinrichtung (4) zum beweglichen Verbinden der Innenlage (3) mit der Innenschicht (2) zwischen einer entfernten Position und einer nahen Position und mindestens einen Kontaktgeber (5) zum Erfassen der nahen Position der Innenlage (3) relativ zu der Innenschicht (2) und zum Steuern und/oder Regeln des Abbruchs der Schließbewegung des Kofferraumdeckels (1).

2. Kofferraumdeckel (1) gemäß Anspruch 1, **dadurch gekennzeichnet, daß** die Innenlage (3) sich im wesentlichen über die ganze durch die Öffnung des Kofferraums definierte Ebene erstreckt.

3. Kofferraumdeckel (1) gemäß Anspruch 1 oder 2, **gekennzeichnet durch** vier deformierbare Verbindungseinrichtungen (4), die jeweils in der Nähe einer entsprechenden Ecke des Kofferraumdeckels (1) angeordnet sind, und einen Kontaktgeber (5), der im wesentlichen in der Mitte desselben angeordnet ist.

4. Kofferraumdeckel (1) nach einem der Ansprüche 1 bis 3, **dadurch gekennzeichnet, daß** jede deformierbare Verbindungseinrichtung (4) zwischen der Innenschicht (2) und der Innenlage (3) angeordnet ist.

5. Kofferraumdeckel (1) nach einem der Ansprüche 1 bis 4, **dadurch gekennzeichnet, daß** jeder Kontaktgeber (5) zwischen der Innenschicht (2) und der Innenlage (3) angeordnet ist.

6. Kofferraumdeckel (1) nach einem der Ansprüche 1 bis 5, **dadurch gekennzeichnet, daß** jede deformierbare Verbindungseinrichtung (4) ein elastisches Bauteil (8) umfaßt, das die Innenlage (3) ständig in die entfernte Position relativ zur Innenschicht (2) drängt.

7. Kofferraumdeckel (1) nach einem der Ansprüche 1 bis 6, **dadurch gekennzeichnet, daß** jede deformierbare Verbindungseinrichtung (4) eine Führung (9), die an einer der beiden Strukturen von der Innenlage (2) oder der Innenschicht (3) befestigt ist, und ein Bauteil (10) umfaßt, das an der anderen Struktur befestigt ist und relativ zur Führung (9) zwischen einer ausgezogenen Position, in der die Innenschicht (3) in seiner entfernten Position relativ zu der Innenlage (2) ist, und einer eingezogenen Position verschiebbar ist, in der die Innenschicht (3) in ihrer nahen Position relativ zur Innenlage (2) ist.
